# EUROPEAN PATENT APPLICATION

(11) **EP 4 455 772 A1**
(43) Date of publication of application: **30.10.2024**
(21) Application number: 23207263.7
(22) Date of filing: 01.11.2023
(51) Int. Cl.: G02F 1/01, H04B 10/50, G02F 1/225, G02B 6/42, G02F 1/025

(54) **OPTICAL TRANSMITTER AND PHOTONIC INTEGRATED CIRCUIT THEREOF**

(30) Priority: 25.04.2023 TW 112115417
(71) Applicant: Wistron Corporation, New Taipei City 22181 (TW)
(72) Inventor: LU, Cheng-Hung, 22181 New Taipei City (TW); LU, Guan-Fu, 22181 New Taipei City (TW)
(74) Representative: Viering, Jentschura & Partner mbB Patent- und Rechtsanwälte

(57) **Abstract**

A photonic integrated circuit (PIC) (20) is adapted to an optical transmitter. The optical transmitter includes a printed circuit board (PCB) (10), a photonic integrated circuit (20), and a set of PCB bond wires (30a, 30b). The PCB includes a transmitter circuit (12) with a set of signal output ports (14a, 14b). The photonic integrated circuit (20) includes a substrate (22), a micro ring modulator (24) and a matching circuit (26). The substrate (22) has a set of input pads (23a, 23b). The micro ring modulator (24) is located on the substrate (22) and includes a set of electrical pads (244, 246). The input pads (23a, 23b) are electrically connected to the electrical pads (244, 246). The matching circuit (26) is electrically connected to the electrical pads (244, 246). The PCB bond wires (30a, 30b) are electrically connected to the signal output ports (14a, 14b) and the input pads (23a, 23b). An impedance value of the matching circuit (26) and the PCB bond wires (30a, 30b) substantially matches the modulation impedance value.

## Description

### BACKGROUND

### Technical Field

The present disclosure relates to an optical transmitter, in particular to an optical transmitter integrating silicon photonic elements.

### Related Art

Fiber-optic communication usually needs an optical transmitter and an optical receiver. The optical transmitter usually includes a light-emitting element, e.g., a laser. With the development of technology, some optical transmitters begin to use silicon photonic elements, such as photonic integrated circuits. The optical transmitter with a photonic integrated circuit usually includes an electrical signal processing part and a photonic integrated circuit part.

When designing the optical transmitter with a photonic integrated circuit, the inventor needs to ensure that the high-frequency signal quality can be maintained when the high-frequency signal is transmitted from the electrical signal processing part to the photonic integrated circuit part, for example, by reducing the resonance generation and/or increasing the system bandwidth.

### SUMMARY

In view of the need of the inventor, the present disclosure provides an optical transmitter. According to an embodiment, the optical transmitter includes a printed circuit board (PCB), a photonic integrated circuit, and a set of PCB bond wires. The PCB includes a transmitter circuit having a set of signal output ports. The photonic integrated circuit includes a substrate, a micro ring modulator and a matching circuit. The substrate has a set of input pads. The micro ring modulator is located on the substrate and includes a set of electrical pads. The input pads are electrically connected to the electrical pads, and the micro ring modulator has a modulation impedance value. The matching circuit is electrically connected to the electrical pads. The PCB bond wires are electrically connected to the signal output ports and the input pads. The PCB bond wires and the matching circuit have a matching impedance value, and the matching impedance value substantially matches the modulation impedance value.

In some embodiments, the micro ring modulator includes a closed loop optical waveguide and a directional optical waveguide. The closed loop optical waveguide is adjacent to the directional optical waveguide.

In some embodiments, the matching circuit includes a matching resistance and a set of substrate bond wires. The matching resistance is electrically connected to the electrical pads through the substrate bond wires, and the substrate bond wires, the matching resistance and the PCB bond wires have the matching impedance value.

In some embodiments, the matching circuit includes a matching resistance. The matching resistance is directly electrically connected to the electrical pads.

The present disclosure further provides a photonic integrated circuit. According to an embodiment, the photonic integrated circuit includes a substrate, a micro ring modulator and a matching circuit. The substrate has a set of input pads. The micro ring modulator is located on the substrate and includes a set of electrical pads. The input pads are electrically connected to the electrical pads, and the micro ring modulator has a modulation impedance value. The matching circuit is electrically connected to the electrical pads. The matching circuit has a matching impedance value, and the matching impedance value substantially matches the modulation impedance value.

The detailed features and advantages of the present disclosure are set forth in the detailed description of the implementation of the present disclosure, the content of which is sufficient for any person skilled in the art to understand the technical content of the present disclosure and implement it based thereon. According to the contents disclosed in this specification, claims and drawings, any person skilled in the art can easily understand the objects and advantages associated with the present disclosure.

### BRIEF DESCRIPTION OF THE DRAWINGS

FIG. 1 is a schematic three-dimensional view of an optical transmitter according to some embodiments.
FIG. 2 is a schematic equivalent circuit diagram of a photonic integrated circuit according to some embodiments.
FIG. 3A is a schematic frequency response diagram of the photonic integrated circuit in the embodiment of FIG. 1 corresponding to Group A parameters in Table 1.
FIG. 3B is a schematic frequency response diagram of the photonic integrated circuit in the embodiment of FIG. 1 corresponding to Group B parameters in Table 1.
FIG. 3C is a schematic frequency response diagram of the photonic integrated circuit in the embodiment of FIG. 1 corresponding to Group C parameters in Table 1.
FIG. 4A is a schematic frequency response diagram of a micro ring modulator alone in the embodiment of FIG. 1.
FIG. 4B is a schematic frequency response diagram of the photonic integrated circuit without substrate bond wires in the embodiment of table 1.
FIG. 4C is a schematic frequency response diagram of the photonic integrated circuit in the embodiment of FIG. 1.
FIG. 5 is a schematic top view of a photonic integrated circuit according to some embodiments.
FIG. 6 is a schematic structural top view of an optical transmitter according to some embodiments.
FIG. 7A is a schematic frequency response diagram of the photonic integrated circuit without a matching circuit in the embodiment of FIG. 2.
FIG. 7B is a schematic frequency response diagram of a photonic integrated circuit (in which a matching circuit includes a matching resistance) in the embodiment of FIG. 6.
FIG. 7C is a schematic frequency response diagram of a photonic integrated circuit (in which a matching circuit includes a matching resistance and substrate bond wires) in the embodiment of FIG. 2.
FIG. 8 is a schematic structural top view of an optical transmitter according to some embodiments.
FIG. 9 is a schematic structural top view of an optical transmitter according to some embodiments.
FIG. 10 is a schematic top view of a photonic integrated circuit according to some embodiments.
FIG. 11 is a schematic top view of a photonic integrated circuit according to some embodiments, and
FIG. 12 is a schematic frequency response diagram of the photonic integrated circuit in the embodiment of FIG. 2.

### DETAILED DESCRIPTION

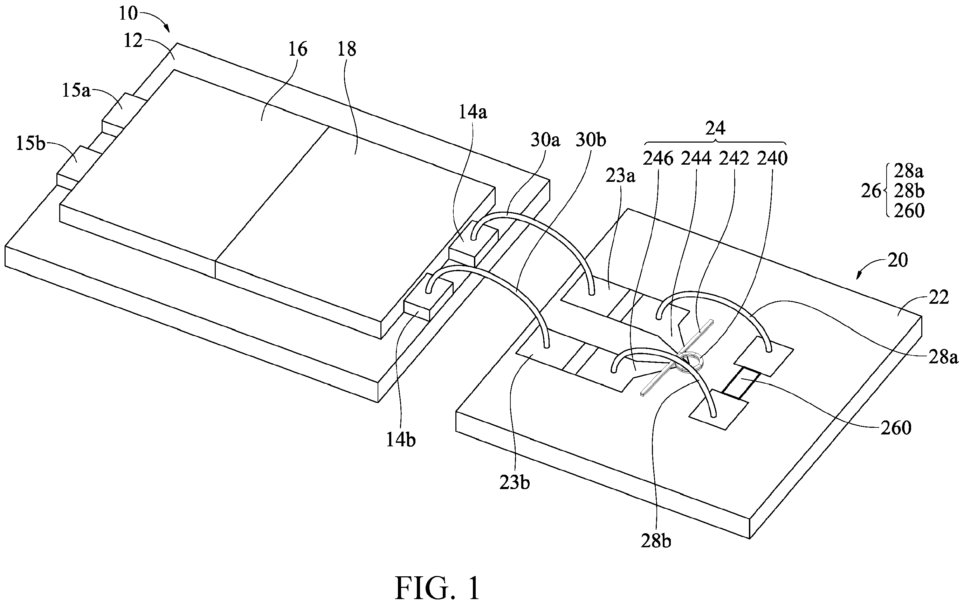

Referring to FIG. 1, FIG. 1 is a schematic three-dimensional view of an optical transmitter according to some embodiments. The optical transmitter includes a printed circuit board (PCB) 10, a photonic integrated circuit 20, and PCB bond wires 30a, 30b. The PCB 10 includes a transmitter circuit 12 and has a set of signal output ports 14a, 14b. The photonic integrated circuit 20 includes a substrate 22, a micro ring modulator 24 and a matching circuit 26. The substrate 22 has a set of input pads 23a, 23b. The micro ring modulator 24 is located on the substrate 22 and includes a set of electrical pads 244, 246. The input pads 23a, 23b are electrically connected to the electrical pads 244, 246 of the micro ring modulator 24. The micro ring modulator 24 has a modulation impedance value. The PCB bond wires 30a, 30b are electrically connected to the signal output ports 14a, 14b and the input pads 23a, 23b. The matching circuit 26 of the photonic integrated circuit 20 is electrically connected to the electrical pads 244, 246 of the micro ring modulator 24. The matching circuit 26 and the PCB bond wires 30a, 30b have a matching impedance value, and the matching impedance value substantially matches the modulation impedance value. In some embodiments, the matching circuit 26 is electrically connected to the electrical pads 244, 246 of the micro ring modulator 24.

Therefore, based on the fact that the matching circuit 26 is connected in parallel to the photonic integrated circuit 20 and the matching impedance value substantially matches the modulation impedance value, the matching circuit 26 has the ability to suppress resonance generation, so that when output signals from the signal output ports 14a, 14b of the PCB 10 are input to the micro ring modulator 24 sequentially through the PCB bond wires 30a, 30b, the input pads 23a, 23b and the electrical pads 244, 246, there will be no reflection enough to affect the signal quality within a predetermined bandwidth. In some embodiments, the aforementioned "the matching circuit 26 and the PCB bond wires 30a, 30b have a matching impedance value" means "the matching circuit 26 and the PCB bond wires 30a, 30b together form a matching impedance value".

In some embodiments, an inductance value of the PCB bond wires 30a, 30b is 0.1 to 3 nH, a length of the PCB bond wires 30a, 30b is 50 to 3000 um, and a diameter of the PCB bond wires 30a, 30b is 0.5 to 2 mil.

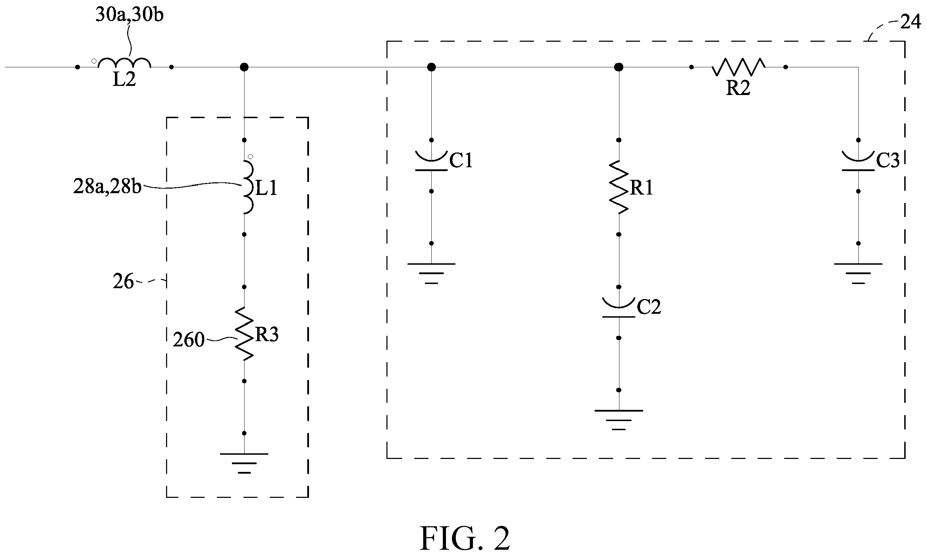

In some embodiments, the matching circuit 26 includes a matching resistance 260 and substrate bond wires 28a, 28b. The matching resistance 260 is electrically connected to the electrical pads 244, 246 through the substrate bond wires 28a, 28b, and the PCB bond wires 30a, 30b, the substrate bond wires 28a, 28b and the matching resistance 260 form the matching impedance value (referring to FIG. 2, detailed later). The substrate bond wires 28a, 28b may be electrically connected to two ends of the matching resistance 260 and the electrical pads 244, 246 separately by wire bonding. In some embodiments, a diameter of the substrate bond wires 28a, 28b is 0.5 to 2 mil, and a length of the substrate bond wires 28a, 28b is 50 to 3000 um. A resistance value of the matching resistance 260 is 10 to 1000 ohm. The matching resistance 260 may be a sheet resistance (as shown in FIG. 1) designed and manufactured by an integrated circuit process, a single chip resistance or other resistance forms that can achieve the same effect.

The aforementioned optical transmitter may be applied to, but not limited to, an opto-electrical transceiver, a small form factor pluggable transceiver, a quad small factor pluggable-double density (QSFP-DD), an octal small form factor (OSFP) and the like.

The aforementioned PCB 10 is configured to provide a signal to be transmitted to the photonic integrated circuit 20. For example, the transmitter circuit 12 receives signals through a set of signal input ports 15a, 15b, and the signals are processed by the transmitter circuit 12 and transmitted to the photonic integrated circuit 20 through the signal output ports 14a, 14b (detailed later).

In some embodiments, the micro ring modulator 24 includes a closed loop optical waveguide 240 and a directional optical waveguide 242, The closed loop optical waveguide 240 is adjacent to the directional optical waveguide 242. The closed loop optical waveguide 240 is a closed ring, which may be, for example, a ring waveguide. The aforementioned directional optical waveguide 242 is a directional coupler, which may be a curved directional coupler (CDC, or bus waveguide) or a straight directional coupler (SDC). The aforementioned closed loop optical waveguide 240 is adjacent to the directional optical waveguide 242 means that a distance between the closed loop optical waveguide 240 and the directional optical waveguide 242 is sufficient for them to generate an optical coupling effect, that is, the distance is sufficient for coupling of photons from the directional optical waveguide 242 to the closed loop optical waveguide 240. The aforementioned electrical pads 244, 246 are usually connected to a PN junction of the micro ring modulator 24. After the electrical signal is input into the PN junction through the electrical pads 244, 246, the bias voltage applied to the PN junction will be changed, so that the equivalent refractive index in the closed loop optical waveguide 240 changes with the input electrical signal. Thereby, the intensity or phase of light energy required for coupling the directional optical waveguide 242 to the closed loop optical waveguide 240 is changed, so that the amplitude of light output from the micro ring modulator 24 is changed, thereby achieving the effect of light modulation. Usually, a P+ doped region of the PN junction is electrically connected to the signal, and an N+ doped region of the PN junction is electrically connected to the ground.

The aforementioned matching circuit 26 may be electrically connected to the electrical pads 244, 246 in various implementations, which are, for example, but not limited to, FIG. 1, FIG. 6, and FIG. 8 to FIG. 9.

In some embodiments, the number of one set of signal output ports 14a, 14b, the number of one set of input pads 23a, 23b, the number of one set of electrical pads 244, 246, and the number of one set of PCB bond wires 30a, 30b may be two, three or more; and their electrical connection relationship is a one-to-one electrical connection relationship. In the embodiment of FIG. 1, one set of signal output ports 14a, 14b include an S signal output port 14a and a G signal output port 14b. One set of input pad 23a, 23b include an S input pad 23a and a G input pad 23b. One set of electrical pads 244, 246 include an S electrical pad 244 and a G electrical pad 246. One set of PCB bond wires 30a, 30b include an S PCB bond wire 30a and a G PCB bond wire 30b. The S PCB bond wire 30a and the G PCB bond wire 30b electrically connect the S signal output port 14a and the G signal output port 14b to the S input pad 23a and the G input pad 23b respectively. The S input pad 23a and the G input pad 23b are electrically connected to the S electrical pad 244 and the G electrical pad 246 respectively. Two ends of the matching resistance 260 are electrically connected to the S electrical pad 244 and the G electrical pad 246 respectively (referring to FIG. 2, the two ends of the matching resistance 260 in FIG. 1 are electrically connected to the electrical pads 244, 246 through the substrate bond wires 28a, 28b, and the PCB bond wires 30a, 30b, the substrate bond wires 28a, 28b, and the matching resistance 260 form a matching impedance value). Therefore, the matching resistance 260 is connected in parallel to the micro ring modulator 24, such that the signal from the S signal output port 14a and the G signal output port 14b can be input into the micro ring modulator 24 with less reflection. In some embodiments, the S signal output port 14a, the S PCB bond wire 30a, the S input pad 23a and the S electrical pad 244 are configured to transmit a drive signal (described later) and electrically connected to the P+ doped region of the micro ring modulator 24, and the G signal output port 14b, the G PCB bond wire 30b, the G input pad 23b and the G electrical pad 246 are configured to transmit a ground signal and electrically connected to the N+ doped region of the micro ring modulator 24.

Specifically, through the electrical connections between the above elements, the matching impedance value substantially matches the modulation impedance value of the micro ring modulator 24, which reduces the reflection loss caused by discontinuous interface impedance generated when high-frequency signals are input into the micro ring modulator 24, and compensates for the uneven frequency response easily caused when the PCB 10 is connected to the micro ring modulator 24. In some embodiments, the matching impedance value is 10 to 1000 ohm. However, the matching impedance value may be designed according to the overall impedance in the specific implementation. For example, the matching impedance value may be designed according to the desired flatness of frequency response, the value of bandwidth, or the degree of compensation for the high frequency loss of the overall system channel.

For the design of the matching impedance value, reference may be made to FIG. 2. FIG. 2 is a schematic equivalent circuit diagram of a photonic integrated circuit according to some embodiments of the present disclosure. FIG. 2 shows a schematic equivalent circuit diagram in which a signal from the S signal output port 14a of the PCB 10 is connected to the micro ring modulator 24 through the S PCB bond wire 30a, the S input pad 23a and the S electrical pad 244 and the G signal output port 14b, the G PCB bond wire 30b, the G input pad 23b and the G electrical pad 246 are connected to the ground. As can be seen from the figure, if the matching impedance value (which is, in the embodiment of FIG. 1, the matching impedance value formed by the inductance value of the PCB bond wires 30a, 30b the inductance value of the substrate bond wires 28a, 28b and the resistance value of the matching resistance 260) can match the modulation impedance value of the micro ring modulator 24, then the reflection of the signal can be greatly reduced, thereby improving the stability of transmission of high-frequency signals. Based on the fact that the modulation impedance value of the micro ring modulator 24 cannot be determined immediately during design, the optical transmitter of this embodiment can obtain a better resistance value of the matching resistance 260, a better inductance value of the substrate bond wires 28a, 28b, and a better inductance value of the PCB bond wires 30a, 30b by properly designing the matching impedance value (i.e., the diameter and length of the PCB bond wires 30a, 30b, the diameter and length of the substrate bond wires 28a, 28b, and the resistance value of the matching resistance 260) and performing corresponding experiments. The desired inductance value of the substrate bond wires 28a, 28b and the desired inductance value of the PCB bond wires 30a, 30b can be obtained by adjusting the diameter and/or length of the wires. As can be seen from FIG. 2, in a preferred implementation, the diameter and length of the substrate bond wires 28a, 28b, the resistance value of the matching resistance 260, and the inductance value of the PCB bond wires 30a, 30b are matched with the modulation impedance value of the micro ring modulator 24.

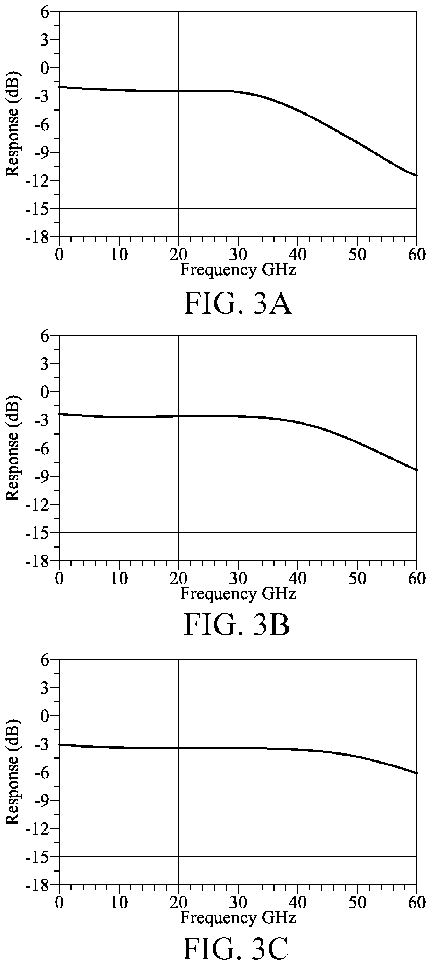

Table 1 below shows adjustments of the inductance value of the PCB bond wires 30a, 30b, the resistance value of the matching resistance 260, and the inductance value of the substrate bond wires 28a, 28b respectively in order to optimize the bandwidth. With reference to FIG. 3A, FIG. 3B and FIG. 3C, FIG. 3A, FIG. 3B and FIG. 3C are respectively schematic frequency response diagrams of the photonic integrated circuit in the embodiment of FIG. 1 and FIG. 2 corresponding to Group A, Group B and Group C parameters in Table 1. In FIG. 3A to FIG. 3C, the horizontal axis is frequency in GHz, and the vertical axis is response in dB. As can be seen from the figures, the photonic integrated circuit 20 can obtain a 3 dB bandwidth of flat frequency response in different frequency bands corresponding to different groups of design parameters.

**Table 1:**

| Group | Inductance of PCB bond wires | Matching impedance value | Inductance of substrate bond wires | 3 dB bandwidth of flat frequency response |
|---|---|---|---|---|
| A | 1.0 nH | 180 ohm | 0.9 nH | 42 GHz |
| B | 0.7 nH | 160 ohm | 0.7 nH | 50 GHz |
| C | 0.5 nH | 120 ohm | 0.5 nH | 60 GHz |

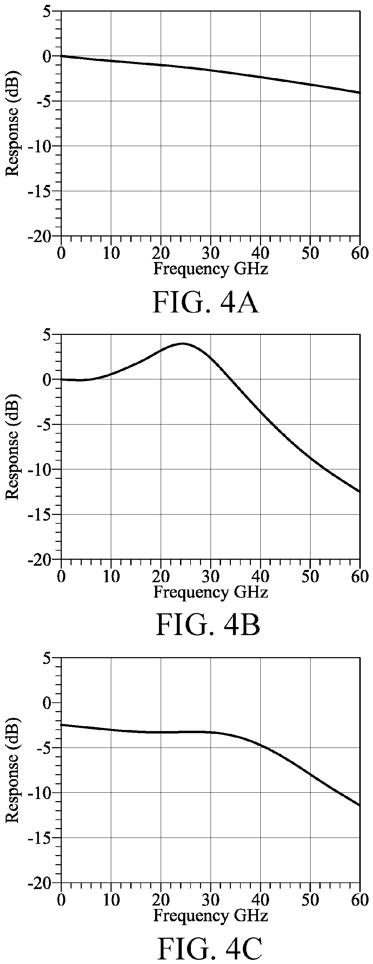

Next, referring to FIG. 4A, FIG. 4B and FIG. 4C, FIG. 4A is a schematic frequency response diagram of a micro ring modulator alone in the embodiment of FIG. 1 (i.e., a schematic frequency response diagram of the micro ring modulator 24 alone in FIG. 1 and FIG. 2 without the PCB bond wires 30a, 30b, the substrate bond wires 28a, 28b and the matching resistance 260). FIG. 4B is a schematic frequency response diagram of the photonic integrated circuit 20 in the embodiment of FIG. 1, including the PCB bond wire 30a, 30b, but not including the substrate bond wires 28a, 28b and the matching resistance 260. FIG. 4C is a schematic frequency response diagram of the photonic integrated circuit in the embodiment of FIG. 1. As can be seen from FIG. 4B, the micro ring modulator 24 (photonic integrated circuit 20) has an obvious frequency response protrusion around 25 GHz due to resonance after assembly and wire bonding. Referring to FIG. 4C, by properly configuring the matching resistance 260, the PCB bond wires 30a, 30b and the substrate bond wires 28a, 28b in the photonic integrated circuit 20, the aforementioned resonance problem is solved and the frequency response is flattened.

Still referring to FIG. 1, in some embodiments, the transmitter circuit 12 includes a pulse amplitude modulation circuit 16, a drive circuit 18, and a set of signal input ports 15a, 15b (FIG. 1 shows the pulse amplitude modulation circuit 16 and the drive circuit 18 as two blocks respectively). The pulse amplitude modulation circuit 16 modulates an input signal from the signal input ports 15a, 15b into a modulation signal in accordance with system requirements, and the drive circuit 18 converts the modulation signal into a drive signal and outputs the drive signal to the photonic integrated circuit 20 through the signal output ports 14a, 14b. In some embodiments, the pulse amplitude modulation circuit 16 is a pulse amplitude modulation 4-level (PAM4), configured to modulate an input signal into a PAM4 signal.

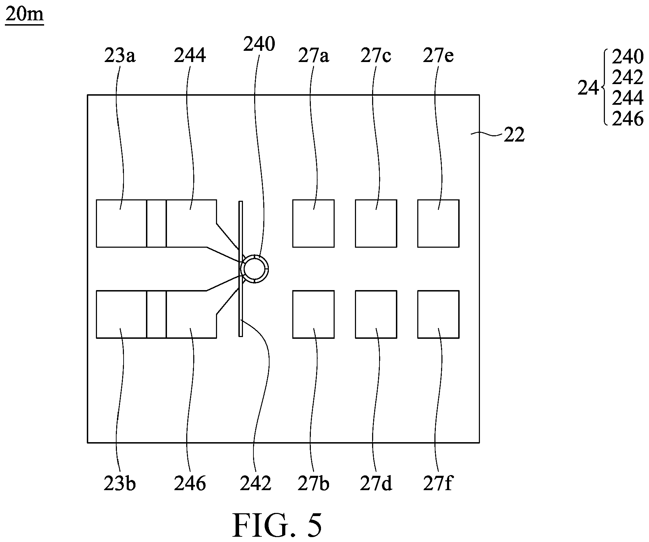

Referring to FIG. 5, FIG. 5 is a schematic top view of a photonic integrated circuit according to some embodiments. The photonic integrated circuit 20m includes a substrate 22, a micro ring modulator 24 and a plurality of impedance pads 27a, 27b, 27c, 27d (which may be respectively called a first set of impedance pads 27a, 27b and a second set of impedance pads 27c, 27d). The impedance pads 27a, 27b, 27c, 27d are located on a side of the micro ring modulator 24. In some embodiments, the distances between each set of impedance pads 27a, 27b, 27c, 27d and the electrical pads 244, 246 of the micro ring modulator 24 are substantially the same. For example, the distance between the S impedance pad 27a in the first set and the S electrical pad 244 is the same as the distance between the G impedance pad 27b in the first set and the G electrical pad 246, and the distance between the S impedance pad 27c in the second set and the S electrical pad 244 is the same as the distance between the G impedance pad 27d in the second set and the G electrical pad 246. This photonic integrated circuit 20m may be configured to test the appropriate matching impedance value and the corresponding substrate bond wires 28a, 28b in a case that the modulation impedance value of the micro ring modulator 24 is unknown. Specifically, the designer may configure different matching resistances 260 for each set of impedance pads 27a, 27b, 27c, 27d and use the substrate bond wires 28a, 28b with different diameters and lengths to obtain different matching circuits 26 and corresponding matching impedance values, and determine the appropriate matching impedance value and the diameter and length of the corresponding substrate bond wires 28a, 28b according to the frequency response diagram. The number of sets of the aforementioned impedance pads 27a, 27b, 27c, 27d may be adjusted according to needs. For example, the photonic integrated circuit 20m includes three sets of impedance pads 27a, 27b, 27c, 27d, 27e, 27f, but is not limited thereto. The number of sets of the impedance pads 27a, 27b, 27c, 27d, 27e, 27f may be four or more.

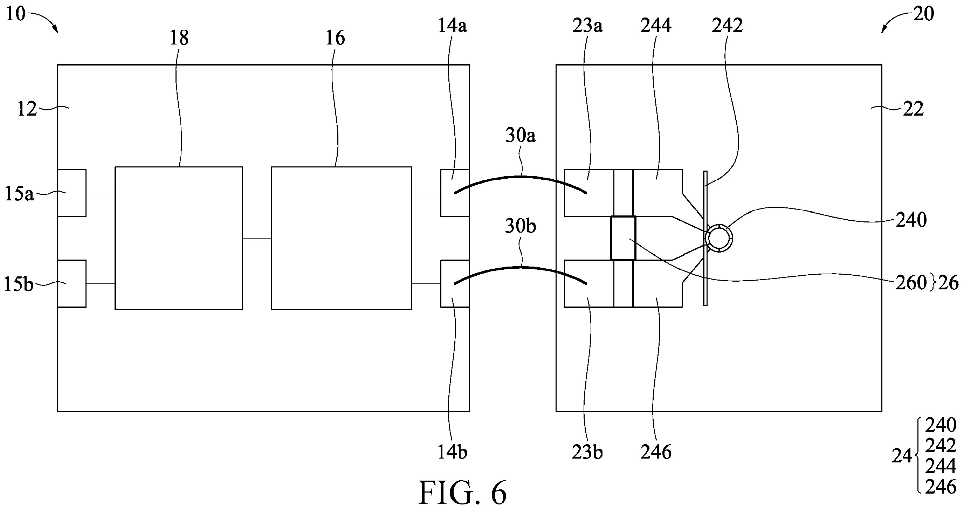

Referring to FIG. 6, FIG. 6 is a schematic structural top view of an optical transmitter according to some embodiments. In this embodiment, the optical transmitter includes a PCB 10, a photonic integrated circuit 20 and PCB bond wires 30a, 30b. The PCB 10 includes a transmitter circuit 12 and has a set of signal output ports 14a, 14b. The photonic integrated circuit 20 includes a substrate 22, a micro ring modulator 24 and a matching circuit 26. The substrate 22 has a set of input pads 23a, 23b. The micro ring modulator 24 is located on the substrate 22 and includes a closed loop optical waveguide 240, a directional optical waveguide 242 and a set of electrical pads 244, 246. The closed loop optical waveguide 240 is adjacent to the directional optical waveguide 242. The input pads 23a, 23b are electrically connected to the electrical pads 244, 246 of the micro ring modulator 24. The micro ring modulator 24 has a modulation impedance value. The PCB bond wires 30a, 30b are electrically connected to the signal output ports 14a, 14b and the input pads 23a, 23b. The matching circuit 26 of the photonic integrated circuit 20 is electrically connected to the electrical pads 244, 246 of the micro ring modulator 24. The matching circuit 26 and the PCB bond wires 30a, 30b have a matching impedance value, and the matching impedance value substantially matches the modulation impedance value. This embodiment may be applied to an optical transmitter whose input signal is of GSG (Ground-Signal-Ground) type. As can be seen from the figure, the matching circuit 26 in the embodiment of FIG. 6 is the matching resistance 260, and two ends of the matching resistance 260 are directly electrically connected to the electrical pads 244, 246.

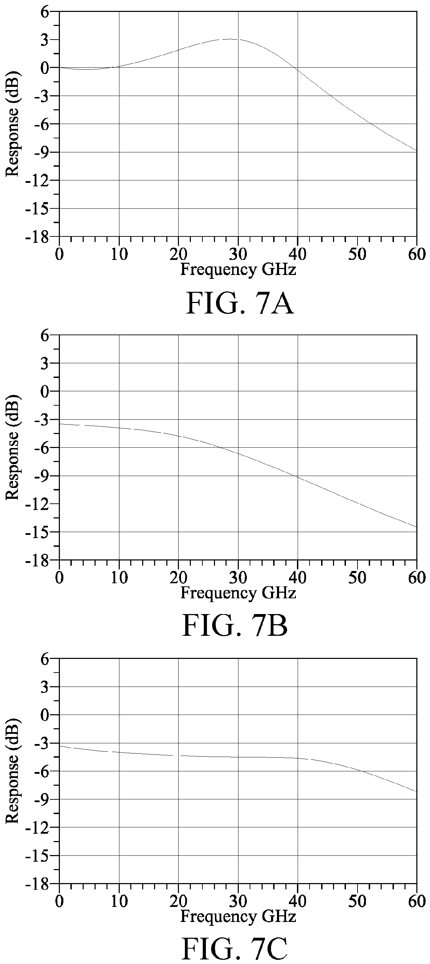

Referring to FIG. 7A, FIG. 7B and FIG. 7C, FIG. 7A is a schematic frequency response diagram of the photonic integrated circuit without a matching circuit in the embodiment of FIG. 2. FIG. 7B is a schematic frequency response diagram of a photonic integrated circuit (in which a matching circuit includes a matching resistance) in the embodiment of FIG. 6. FIG. 7C is a schematic frequency response diagram of a photonic integrated circuit (in which a matching circuit includes a matching resistance and substrate bond wires) in the embodiment of FIG. 2. As can be seen from FIG. 7A, the photonic integrated circuit 20 without the matching circuit 26 has the resonance, causing uneven frequency response and a protrusion at the frequency of 30 GHz. The matching circuit 26 of the photonic integrated circuit 20 shown in FIG. 7B includes only the matching resistance 260, and the matching resistance 260 has the effect of suppressing resonance, so there is no frequency response protrusion at 30 GHz. However, the 3 dB bandwidth of the photonic integrated circuit 20 is reduced. The matching circuit 26 of the photonic integrated circuit 20 shown in FIG. 7C includes the matching resistance 260 and the substrate bond wires 28a, 28b. The bandwidth of this photonic integrated circuit 20 has no protrusion at 30 GHz, and the 3 dB bandwidth is increased. Therefore, in the embodiment where the matching circuit 26 includes the matching resistance 260 and the substrate bond wires 28a, 28b, the photonic integrated circuit 20 has both the effect of suppressing resonance and the effect of increasing the system bandwidth.

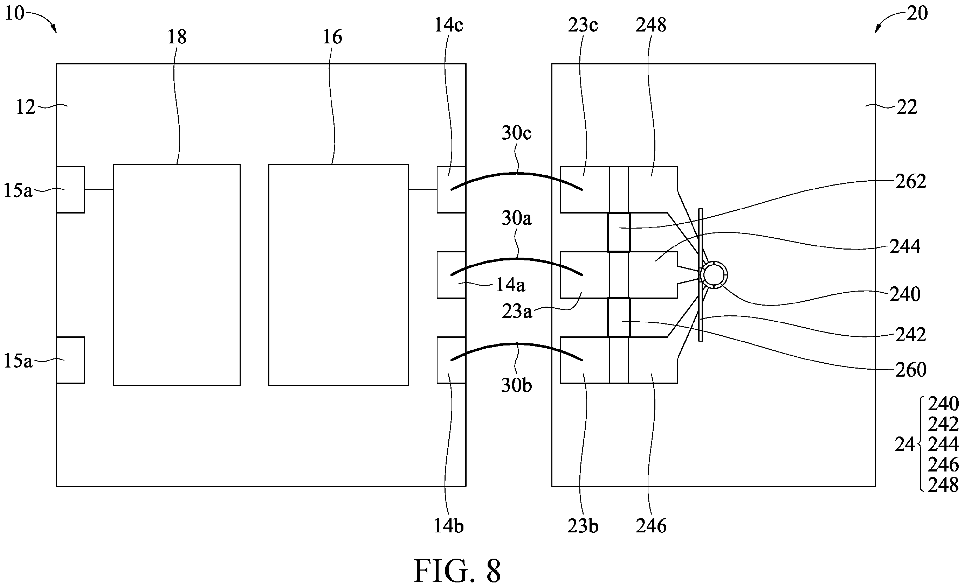

Referring to FIG. 8, FIG. 8 is a schematic structural top view of an optical transmitter according to some embodiments. The optical transmitter in the embodiment of FIG. 8 includes a printed circuit board 10, a photonic integrated circuit 20, and a set of PCB bond wires 30a, 30b, 30c. The printed circuit board 10 includes a set of signal output ports 14a, 14b, 14c. The photonic integrated circuit 20 includes a substrate 22, a micro ring modulator 24 and a matching circuit 26. The substrate 22 includes a set of input pads 23a, 23b, 23c. The matching circuit 26 includes a first matching resistance 260 and a second matching resistance 262. The micro ring modulator 24 includes a closed loop optical waveguide 240, a directional optical waveguide 242 and a set of electrical pads 244, 246, 248. The PCB bond wires 30a, 30b, 30c include an S PCB bond wire 30a, a first G PCB bond wire 30b and a second G PCB bond wire 30c. The signal output ports 14a, 14b, 14c include an S signal output port 14a, a first G signal output port 14b and a second G signal output port 14c. The input pads 23a, 23b, 23c include an S input pad 23a, a first G input pad 23b and a second G input pad 23c. The electrical pads 244, 246, 248 include an S electrical pad 244, a first G electrical pad 246 and a second G electrical pad 248. The S PCB bond wire 30a, the first G PCB bond wire 30b and the second G PCB bond wire 30c electrically connect the S signal output port 14a, the first G signal output port 14b and the second G signal output port 14c to the S input pad 23a, the first G input pad 23b and the second G input pad 23c respectively. The S input pad 23a, the first G input pad 23b and the second G input pad 23c are electrically connected to the S electrical pad 244, the first G electrical pad 246 and the second G electrical pad 248 respectively. Two ends of the first matching resistance 260 are electrically connected to the S electrical pad 244 and the first G electrical pad 246 respectively, and two ends of the second matching resistance 262 are electrically connected to the S electrical pad 244 and the second G electrical pad 248 respectively.

In the embodiment of FIG. 8, the two ends of the first matching resistance 260 are directly electrically connected to the S electrical pad 244 and the first G electrical pad 246 respectively, and the two ends of the second matching resistance 262 are directly electrically connected to the S electrical pad 244 and the second G electrical pad 248 respectively. Therefore, the first matching resistance 260, the second matching resistance 262 and the PCB bond wires 30a, 30b, 30c have a matching impedance value. Based on the fact that the matching impedance value substantially matches the modulation impedance value, the matching circuit 26 has the effect of suppressing resonance generation.

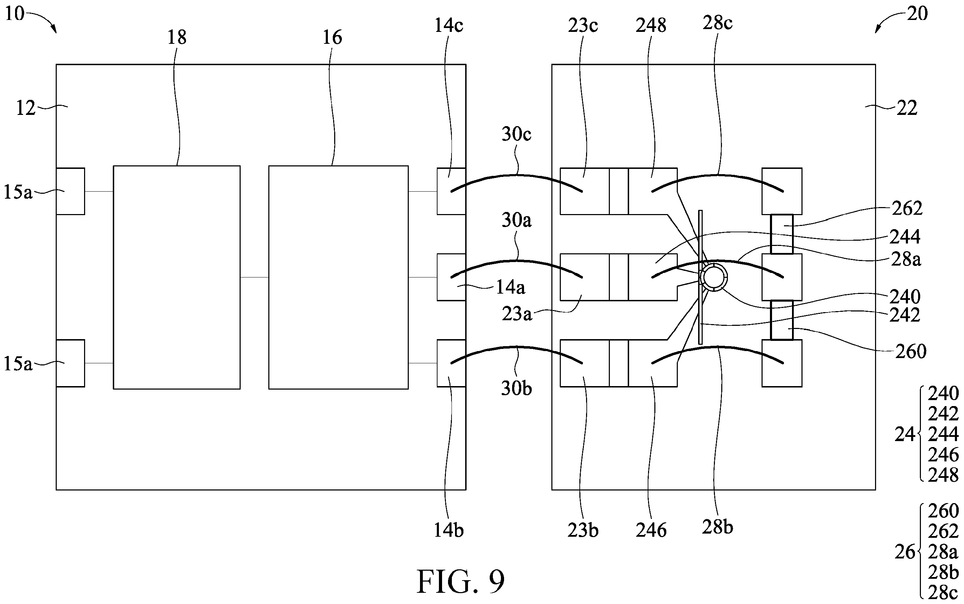

In the embodiment of FIG. 9, the two ends of the first matching resistance 260 are indirectly electrically connected to the S electrical pad 244 and the first G electrical pad 246 respectively, and the two ends of the second matching resistance 262 are indirectly electrically connected to the S electrical pad 244 and the second G electrical pad 248 respectively. In this embodiment, the matching circuit 26 further includes a set of substrate bond wires 28a, 28b, 28c. The substrate bond wires 28a, 28b, 28c include an S substrate bond wire 28a, a first G substrate bond wire 28b and a second G substrate bond wire 28c. The S substrate bond wire 28a and the first G substrate bond wire 28b electrically connect the two ends of the first matching resistance 260 to the S electrical pad 244 and the first G electrical pad 246 respectively. The S substrate bond wire 28a and the second G substrate bond wire 28c electrically connect the two ends of the second matching resistance 262 to the S electrical pad 244 and the second G electrical pad 248 respectively. Therefore, the first matching resistance 260, the second matching resistance 262, the substrate bond wires 28a, 28b, 28c, and the PCB bond wires 30a, 30b, 30c have a matching impedance value. Based on the fact that the matching impedance value substantially matches the modulation impedance value, the matching circuit 26 has the effects of suppressing resonance generation and increasing system bandwidth.

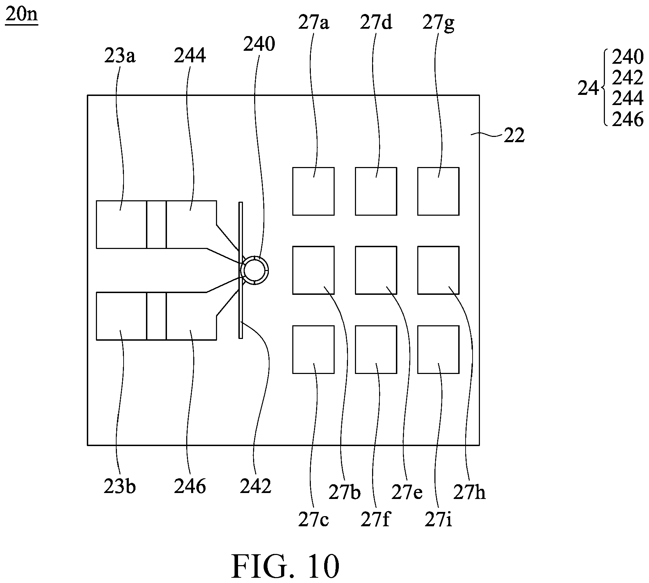

Referring to FIG. 10, FIG. 10 is a schematic top view of a photonic integrated circuit according to some embodiments. The photonic integrated circuit 20n includes a substrate 22, a micro ring modulator 24 and a plurality of impedance pads 27a, 27b, 27c, 27d, 27e, 27f (which may be respectively called a first set of impedance pads 27a, 27b, 27c and a second set of impedance pads 27d, 27e, 27f). The impedance pads 27a, 27b, 27c, 27d, 27e, 27f are located on a side of the micro ring modulator 24. One set of impedance pads 27a, 27b, 27c may be configured with a first matching resistance 260 and a second matching resistance 262. In some embodiments, the distances between each set of impedance pads 27a, 27b, 27c, 27d, 27e, 27f and the electrical pads 244, 246, 248 of the micro ring modulator 24 are substantially the same, which is similar to the description of FIG. 5 and will not be described in detail here. This photonic integrated circuit 20n may be configured to test the appropriate matching impedance value and the corresponding substrate bond wires 28a, 28b, 28c (not shown in FIG. 10, referring to FIG. 8) in a case that the modulation impedance value of the micro ring modulator 24 is unknown. Specifically, the designer may configure different matching resistances 260 for each set of impedance pads 27a, 27b, 27c, 27d, 27e, 27f and use the substrate bond wires 28a, 28b, 28c with different diameters and lengths to obtain different matching circuits 26 and corresponding matching impedance values, and determine the appropriate matching impedance value and the diameter and length of the corresponding substrate bond wires 28a, 28b, 28c according to the frequency response diagram. The number of sets of the aforementioned impedance pads 27a, 27b, 27c, 27d, 27e, 27f may be adjusted according to needs. For example, the photonic integrated circuit 20n includes three sets of impedance pads 27a, 27b, 27c, 27d, 27e, 27f, 27g, 27h, 27i, but is not limited thereto. The number of sets of the impedance pads 27a, 27b, 27c, 27d, 27e, 27f, 27g, 27h, 27i may be four or more.

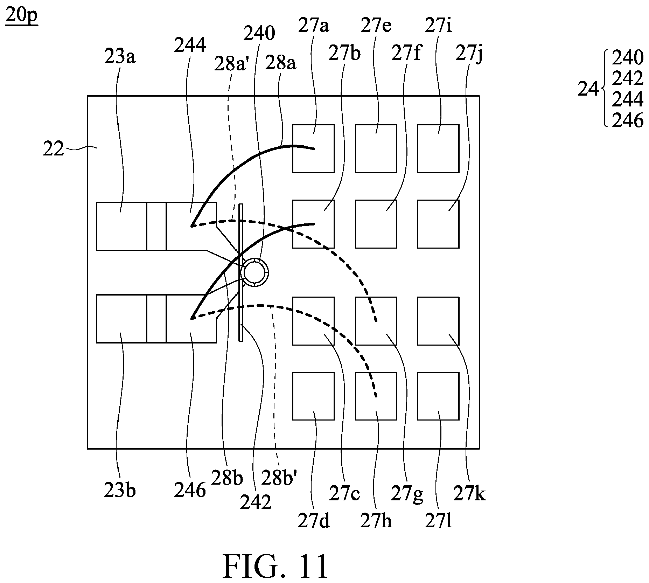

Referring to FIG. 11, FIG. 11 is a schematic top view of a photonic integrated circuit according to some embodiments. The photonic integrated circuit 20p includes a substrate 22, a micro ring modulator 24 and a plurality of impedance pads 27a, 27b, 27c, 27d, 27e, 27f, 27g, 27h, 27i, 27j, 27k, 271 (which may be respectively called a first set of impedance pads 27a, 27b, a second set of impedance pads 27c, 27d and so on). One set of impedance pads 27a, 27b may be configured with one matching resistance 260. This photonic integrated circuit 20p may be configured to test the appropriate matching impedance value and the corresponding substrate bond wires 28a, 28b, 28a', 28b' in a case that the modulation impedance value of the micro ring modulator 24 is unknown. Specifically, the designer may configure different matching resistances 260 for each set of impedance pads 27a, 27b, 27c, 27d, 27e, 27f, 27g, 27h, 27i, 27j, 27k, 271 and use the substrate bond wires 28a, 28b, 28a', 28b' with different diameters and lengths to obtain different matching circuits 26 and corresponding matching impedance values, and determine the appropriate matching impedance value and the diameter and length of the corresponding substrate bond wires 28a, 28b, 28a', 28b' according to the frequency response diagram. The number of sets of the aforementioned impedance pads 27a, 27b, 27c, 27d, 27e, 27f, 27g, 27h, 27i, 27j, 27k, 271 may be adjusted according to needs, for example, but not limited to, three, four, five, six or more.

The inductance values configured for different diameters and lengths of wires when the 3 dB bandwidth of flat frequency response is 26 GHz, and corresponding impedance characteristics are shown in Table 2. The designer may obtain desired characteristics of the micro ring modulator 24 according to Table 2, thereby optimizing the signal quality (suppressing resonance and increasing bandwidth). In the table below, three identical wire bonding heights (200, 300, 400 um) and corresponding lengths (570, 641, 722 um) may correspond to different diameters (0.5, 1, 2 mil) to obtain different impedance characteristics. The real part of the impedance characteristic is denoted by R, and the imaginary part is denoted by X. Then, the impedance characteristic corresponding to each set of diameter, height and length of wires is R+J*X.

**Table 2:**

| Diameter of substrate bond | Wire bonding height (um) | Length of substrate bond | Real part of impedance | Imaginary part of impedance |
|---|---|---|---|---|
| wires (mil) | | wires (um) | characteristic (ohm) | characteristic (ohm) |
| 0.5 | 200 | 570 | 76.9 | 51.2 |
| 1 | 200 | 570 | 64.3 | 29.0 |
| 2 | 200 | 570 | 53.3 | 7.9 |
| 0.5 | 300 | 641 | 84.0 | 69.0 |
| 1 | 300 | 641 | 70.4 | 41.4 |
| 2 | 300 | 641 | 58.0 | 16.0 |
| 0.5 | 400 | 722 | 100.9 | 87.1 |
| 1 | 400 | 722 | 79.3 | 53.1 |
| 2 | 400 | 722 | 62.5 | 22.4 |

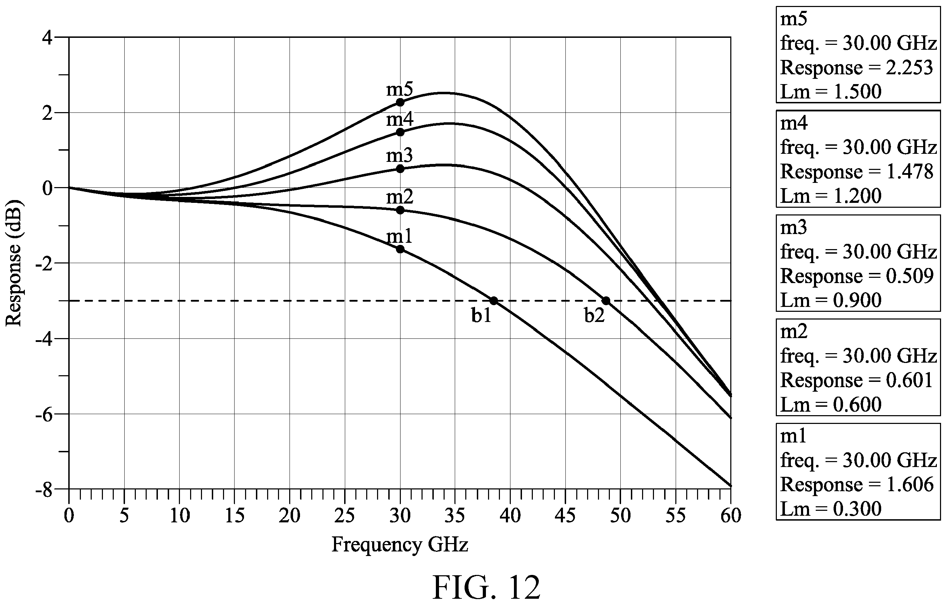

Referring to FIG. 12, FIG. 12 is a schematic frequency response diagram of the photonic integrated circuit in the embodiment of FIG. 2. This figure is based on the embodiment of FIG. 1 and the equivalent circuit diagram of FIG. 2. The desired inductance values of the substrate bond wires 28a, 28b are obtained by inductive peaking in a case that the inductance value of the PCB bond wires 30a, 30b is fixed and the matching resistance 260 is fixed. The frequency response curves m1, m2, m3, m4, m5 correspond to different parameters of the substrate bond wires 28a, 28b respectively, and the corresponding inductance values of the substrate bond wires 28a, 28b are 0.3 nH, 0.6 nH, 0.9 nH, 1.2 nH, 1.5 nH respectively. As can be seen from the figure, the 3 dB bandwidth of the frequency response curve m1 is about 39 GHz (position b1 in the figure), and the 3 dB bandwidth of the frequency response curve m2 is about 49 GHz (position b2 in the figure), so the 3 dB bandwidth of the frequency response curve m2 is about 10 GHz more than that of the frequency response curve m1. In addition, if the high frequency response is taken into consideration, at the frequency 30 GHz, the response of the frequency response curve m2 at 30 GHz is about -0.6 dB (position m2 in the figure), and the response of the frequency response curve m5 at 30 GHz is about 2.25 dB (position m5 in the figure). Therefore, the response at the frequency 30 GHz when the inductance value of the substrate bond wires 28a, 28b is 1.5 nH is about 2.85 dB (2.25-(-0.6)=2.85) more than the response at the frequency 30 GHz when the inductance value of the substrate bond wires 28a, 28b is 0.6 nH. Therefore, the excessive loss of the system channel at high frequency can be avoided by configuring the substrate bond wires 28a, 28b with a large inductance value, and the loss of the high frequency response can be compensated in advance to maintain the flat frequency response. As a result, the desired effects of suppressing resonance and increasing system bandwidth can be obtained through the experiments of FIG. 12.

Referring to FIG. 1, the present disclosure further provides a photonic integrated circuit 20. This photonic integrated circuit 20 is an electronic part before it is electrically connected to the PCB 10. The photonic integrated circuit 20 includes a substrate 22, a micro ring modulator 24 and a matching circuit 26. The substrate 22 has a set of input pads 23a, 23b. The micro ring modulator 24 is located on the substrate 22 and includes a closed loop optical waveguide 240, a directional optical waveguide 242 and a set of electrical pads 244, 246. The closed loop optical waveguide 240 is adjacent to the directional optical waveguide 242. The input pads 23a, 23b are electrically connected to the electrical pads 244, 246 of the micro ring modulator 24. The micro ring modulator 24 has a modulation impedance value. The matching circuit 26 is electrically connected to the electrical pads 244, 246 of the micro ring modulator 24. The matching circuit 26 has a matching impedance value, and the matching impedance value substantially matches the modulation impedance value. In some embodiments, the matching circuit 26 is electrically connected to the electrical pads 244, 246 of the micro ring modulator 24.

According to the photonic integrated circuit 20 of this embodiment, the matching impedance value of the matching circuit 26 directly substantially matches the modulation impedance value regardless of the inductance value of the PCB bond wires 30a, 30b. Even when used without the PCB 10, the photonic integrated circuit 20 of this embodiment can still have good effects of suppressing resonance and increasing system bandwidth.

In addition, the photonic integrated circuit 20 of this embodiment may also be used with a PCB 10 with a predetermined specification. The predetermined specification of the PCB 10 is, for example, but not limited to, an inductance value of a set of PCB bond wires 30a, 30b with specific impedance, for example, the inductance value of the specific PCB bond wires 30a, 30b shown in Table 1. That is, when the photonic integrated circuit 20 of this embodiment is sold, the design specification can be provided to the user, so that the user can design in the best impedance matching mode.

In addition, the photonic integrated circuit 20 of this embodiment may also be designed based on the inductance value of the common PCB bond wires 30a and 30b, i.e., based on the average or median of the inductance values of the common PCB bond wires 30a, 30b. That is, the inductance value average (or the inductance value median) of the PCB bond wires 30a, 30b and the matching circuit 26 form a matching impedance value, and this matching impedance value substantially matches the modulation impedance value. The photonic integrated circuit 20 according to this method can still have good effects of suppressing resonance and increasing system bandwidth.

In some embodiments, as shown in FIG. 1, the aforementioned matching circuit 26 includes the matching resistance 260 and the set of substrate bond wires 28a, 28b. The matching resistance 260 is electrically connected to the electrical pads 244, 246 through the substrate bond wires 28a, 28b. The resistance values of the substrate bond wires 28a, 28b and the matching resistance 260 form the matching impedance value.

In some embodiments, as shown in FIG. 6, the aforementioned matching circuit 26 includes the matching resistance 260. The two ends of the matching resistance 260 are directly electrically connected to the electrical pads 244, 246, and the resistance value of the matching resistance 260 forms the matching impedance value.

In some embodiments, the input pads 23a, 23b include the S input pad 23a and the G input pad 23b, and the electrical pad 244, 246 includes the S electrical pad 244 and the G electrical pad 246. The S input pad 23a and the G input pad 23b are electrically connected to the S electrical pad 244 and the G electrical pad 246 respectively, and the matching circuit 26 is electrically connected to the S electrical pad 244 and the G electrical pad 246.

In some embodiments, the matching impedance value is 10 to 1000 ohm.

The photonic integrated circuit 20 in the embodiment of FIG. 8 includes the substrate 22, the micro ring modulator 24 and the matching circuit 26. The substrate 22 includes the set of input pads 23a, 23b, 23c. The matching circuit 26 includes the first matching resistance 260 and the second matching resistance 262. The micro ring modulator 24 includes the closed loop optical waveguide 240, the directional optical waveguide 242 and the set of electrical pads 244, 246, 248. The input pads 23a, 23b, 23c include the S input pad 23a, the first G input pad 23b and the second G input pad 23c. The electrical pads 244, 246, 248 include the S electrical pad 244, the first G electrical pad 246 and the second G electrical pad 248. The S input pad 23a, the first G input pad 23b and the second G input pad 23c are electrically connected to the S electrical pad 244, the first G electrical pad 246 and the second G electrical pad 248 respectively. The two ends of the first matching resistance 260 are electrically connected to the S electrical pad 244 and the first G electrical pad 246 respectively, and the two ends of the second matching resistance 262 are electrically connected to the S electrical pad 244 and the second G electrical pad 248 respectively.

In some embodiments, the two ends of the first matching resistance 260 are directly electrically connected to the S electrical pad 244 and the first G electrical pad 246, and the two ends of the second matching resistance 262 are directly electrically connected to the S electrical pad 244 and the second G electrical pad 248.

In some embodiments, the matching circuit further includes the set of substrate bond wires 28a, 28b, 28c. The substrate bond wires 28a, 28b, 28c include the S substrate bond wire 28a, the first G substrate bond wire 28b and the second G substrate bond wire 28c. The S substrate bond wire 28a and the first G substrate bond wire 28b electrically connect the two ends of the first matching resistance 260 to the S electrical pad 244 and the first G electrical pad 246 respectively, and the S substrate bond wire 28a and the second G substrate bond wire 28c electrically connect the two ends of the second matching resistance 262 to the S electrical pad 244 and the second G electrical pad 248 respectively.

Based on the above, in some embodiments, the matching impedance value of the optical transmitter or the photonic integrated circuit substantially matches the modulation impedance value, so that the optical transmitter or the photonic integrated circuit has the effect of suppressing resonance and/or the effect of increasing system bandwidth.

## Claims

1. An optical transmitter, comprising:
a printed circuit board (PCB) (10), comprising a transmitter circuit (12), the transmitter circuit (12) having a set of signal output ports (14a, 14b);
a photonic integrated circuit (20), comprising:
a substrate (22), having a set of input pads (23a, 23b);
a micro ring modulator (24), located on the substrate (22), the micro ring modulator (24) comprising a set of electrical pads (244, 246), the set of input pads (23a, 23b) being electrically connected to the set of electrical pads (244, 246), and the micro ring modulator (24) having a modulation impedance value; and
a matching circuit (26), electrically connected to the set of electrical pads (244, 246); and
a set of PCB bond wires (30a, 30b), electrically connected to the set of signal output ports (14a, 14b) and the set of input pads (23a, 23b);
wherein the matching circuit (26) and the set of PCB bond wires (30a, 30b) have a matching impedance value, and the matching impedance value substantially matches the modulation impedance value.

2. The optical transmitter according to claim 1, wherein the matching circuit (26) comprises a matching resistance (260) and a set of substrate bond wires (28a, 28b), the matching resistance (260) being connected to the set of electrical pads (244, 246) through the set of substrate bond wires (28a, 28b), and the set of substrate bond wires (28a, 28b), the matching resistance (260) and the set of PCB bond wires (30a, 30b) having the matching impedance value.

3. The optical transmitter according to claim 1, wherein the matching circuit (26) comprises a matching resistance (260), the matching resistance (260) being directly electrically connected to the set of electrical pads (244, 246).

4. The optical transmitter according to any of claims 1-3, wherein the set of signal output ports (14a, 14b) comprise an S signal output port (14a) and a G signal output port (14b), the set of input pads (23a, 23b) comprise an S input pad (23a) and a G input pad (23b), the set of electrical pads (244, 246) comprise an S electrical pad (244) and a G electrical pad (246), the matching circuit (26) comprises a matching resistance (260), and the set of PCB bond wires (30a, 30b) comprise an S PCB bond wire (30a) and a G PCB bond wire (30b), the S PCB bond wire (30a) and the G PCB bond wire (30b) electrically connecting the S signal output port (14a) and the G signal output port (14b) to the S input pad (23a) and the G input pad (23b) respectively, the S input pad (23a) and the G input pad (23b) being electrically connected to the S electrical pad (244) and the G electrical pad (246) respectively, and two ends of the matching resistance (260) being electrically connected to the S electrical pad (244) and the G electrical pad (246) respectively.

5. The optical transmitter according to any of claims 1-4, wherein the set of signal output ports (14a, 14b, 14c) comprise an S signal output port (14a), a first G signal output port (14b) and a second G signal output port (14c), the set of input pads (23a, 23b, 23c) comprise an S input pad (23a), a first G input pad (23b) and a second G input pad (23c), the set of electrical pads (244, 246, 248) comprise an S electrical pad (244), a first G electrical pad (246) and a second G electrical pad (248), the matching circuit (26) comprises a first matching resistance (260) and a second matching resistance (262), and the set of PCB bond wires (30a, 30b, 30c) comprise an S PCB bond wire (30a), a first G PCB bond wire (30b) and a second G PCB bond wire (30c), the S PCB bond wire (30a), the first G PCB bond wire (30b) and the second G PCB bond wire (30c) electrically connecting the S signal output port (14a), the first G signal output port (14b) and the second G signal output port (14c) to the S input pad (23a), the first G input pad (23b) and the second G input pad (23c) respectively, the S input pad (23a), the first G input pad (23b) and the second G input pad (23c) being electrically connected to the S electrical pad (244), the first G electrical pad (246) and the second G electrical pad (248) respectively, two ends of the first matching resistance (260) being electrically connected to the S electrical pad (244) and the first G electrical pad (246) respectively, and two ends of the second matching resistance (262) being electrically connected to the S electrical pad (244) and the second G electrical pad (248) respectively.

6. The optical transmitter according to any of claims 4 and 5, wherein the two ends of the first matching resistance (260) are directly electrically connected to the S electrical pad (244) and the first G electrical pad (246), and the two ends of the second matching resistance (262) are directly electrically connected to the S electrical pad (244) and the second G electrical pad (248).

7. The optical transmitter according to any of claims 1-6, wherein the matching circuit (26) further comprises a set of substrate bond wires (28a, 28b, 28c), the set of substrate bond wires (28a, 28b, 28c) comprising an S substrate bond wire (28a), a first G substrate bond wire (28b) and a second G substrate bond wire (28c), the S substrate bond wire (28a) and the first G substrate bond wire (28b) electrically connecting the two ends of the first matching resistance (260) to the S electrical pad (244) and the first G electrical pad (246) respectively, and the S substrate bond wire (28a) and the second G substrate bond wire (28c) electrically connecting the two ends of the second matching resistance (262) to the S electrical pad (244) and the second G electrical pad (248) respectively.

8. The optical transmitter according to any of claims 1-7, wherein the transmitter circuit (12) comprises a pulse amplitude modulation circuit (16), a drive circuit (18) and a set of signal input ports (15a, 15b), the pulse amplitude modulation circuit (16) modulating an input signal from the set of signal input ports (15a, 15b) into a modulation signal, and the drive circuit (18) converting the modulation signal into a drive signal.

9. A photonic integrated circuit (20), comprising:
a substrate (22), having a set of input pads (23a, 23b);
a micro ring modulator (24), located on the substrate (22), the micro ring modulator (24) comprising a closed loop optical waveguide (240), a directional optical waveguide (242) and a set of electrical pads (244, 246), the closed loop optical waveguide (240) being adjacent to the directional optical waveguide (242), the set of input pads (23a, 23b) being electrically connected to the set of electrical pads (244, 246), and the micro ring modulator (24) having a modulation impedance value; and
a matching circuit (26), electrically connected to the set of electrical pads (244, 246), the matching circuit (26) having a matching impedance value, and the matching impedance value substantially matching the modulation impedance value.

10. The photonic integrated circuit (20) according to claim 9, wherein the matching circuit (26) comprises a matching resistance (260) and a set of substrate bond wires (28a, 28b), the matching resistance (260) being connected to the set of electrical pads (244, 246) through the set of substrate bond wires (28a, 28b), and a resistance value of the set of substrate bond wires (28a, 28b) and the matching resistance (260) forming the matching impedance value.

11. The photonic integrated circuit (20) according to any of claims 9-10, wherein the matching circuit (26) comprises a matching resistance (260), two ends of the matching resistance (260) being directly electrically connected to the set of electrical pads (244, 246).

12. The photonic integrated circuit (20) according to any of claims 9-11, wherein the set of input pads (23a, 23b) comprise an S input pad (23a) and a G input pad (23b), and the set of electrical pads (244, 246) comprise an S electrical pad (244) and a G electrical pad (246), and the S input pad (23a) and the G input pad (23b) being electrically connected to the S electrical pad (244) and the G electrical pad (246) respectively, and the matching circuit (26) being electrically connected to the S electrical pad (244) and the G electrical pad (246).

13. The photonic integrated circuit (20) according to any of claims 9-12, wherein the set of input pads (23a, 23b, 23c) comprise an S input pad (23a), a first G input pad (23b) and a second G input pad (23c), the set of electrical pads (244, 246) comprise an S electrical pad (244), a first G electrical pad (246) and a second G electrical pad (248), and the matching circuit (26) comprises a first matching resistance (260) and a second matching resistance (262), the S input pad (23a), the first G input pad (23b) and the second G input pad (23c) being electrically connected to the S electrical pad (244), the first G electrical pad (246) and the second G electrical pad (248) respectively, two ends of the first matching resistance (260) being electrically connected to the S electrical pad (244) and the first G electrical pad (246) electrically, and two ends of the second matching resistance (262) being electrically connected to the S electrical pad (244) and the second G electrical pad (248) respectively.

14. The photonic integrated circuit (20) according to any claims 9-13, wherein the two ends of the first matching resistance (260) are directly electrically connected to the S electrical pad (244) and the first G electrical pad (246), and the two ends of the second matching resistance (262) are directly electrically connected to the S electrical pad (244) and the second G electrical pad (248).

15. The photonic integrated circuit (20) according to any claims 9-14, wherein the matching circuit (26) further comprises a set of substrate bond wires (28a, 28b, 28c), the set of substrate bond wires (28a, 28b, 28c) comprising an S substrate bond wire (28a), a first G substrate bond wire (28b) and a second G substrate bond wire (28c), the S substrate bond wire (28a) and the first G substrate bond wire (28b) electrically connecting the two ends of the first matching resistance (260) to the S electrical pad (244) and the first G electrical pad (246) respectively, and the S substrate bond wire (28a) and the second G substrate bond wire (28c) electrically connecting the two ends of the second matching resistance (262) to the S electrical pad (244) and the second G electrical pad (248) respectively.

## Amended claims

### Amended claims in accordance with Rule 137(2) EPC.

1. An optical transmitter comprising a micro ring modulator (24), the optical transmitter **characterized in** further comprising:
a printed circuit board (PCB) (10), comprising a transmitter circuit (12), the transmitter circuit (12) having a set of signal output ports (14a, 14b);
a photonic integrated circuit (20), comprising:
a substrate (22), having a set of input pads (23a, 23b), the micro ring modulator (24) located on the substrate (22), the micro ring modulator (24) comprising a set of electrical pads (244, 246), the set of input pads (23a, 23b) being electrically connected to the set of electrical pads (244, 246), and the micro ring modulator (24) having a modulation impedance value; and
a matching circuit (26), electrically connected to the set of electrical pads (244, 246);
a first impedance pad set, comprising a first S impedance pad (27a) and a first G impedance pad (27b), a first distance between the first S impedance pad (27a) and one electrical pad (244) of the set of electrical pads (244, 246) is the same as the distance between the first G impedance pad (27b) and the other electrical pad (246) of the set of electrical pads (244, 246);
a second impedance pad set, comprising a second S impedance pad (27c) and a second G impedance pad (27d), a second distance between the second S impedance pad (27c) and one electrical pad (244) of the set of electrical pads (244, 246) is the same as the distance between the second G impedance pad (27d) and the other electrical pad (246) of the set of electrical pads (244, 246); and
a set of PCB bond wires (30a, 30b), electrically connected to the set of signal output ports (14a, 14b) and the set of input pads (23a, 23b);
wherein the matching circuit (26) and the set of PCB bond wires (30a, 30b) have a matching impedance value, which is configured to match the modulation impedance value;
wherein the second distance is longer than the first distance, and the matching circuit (26) is configured to electrically connect to the set of electrical pads (244, 246) through the first impedance pad set or the second impedance pad set.

2. The optical transmitter according to claim 1, wherein the matching circuit (26) comprises a matching resistance (260) and a set of substrate bond wires (28a, 28b), the matching resistance (260) being connected to the set of electrical pads (244, 246) through the set of substrate bond wires (28a, 28b), and the set of substrate bond wires (28a, 28b), the matching resistance (260) and the set of PCB bond wires (30a, 30b) having the matching impedance value.

3. The optical transmitter according to claim 1, wherein the matching circuit (26) comprises a matching resistance (260), the matching resistance (260) being directly electrically connected to the set of electrical pads (244, 246).

4. The optical transmitter according to any of claims 1-3, wherein the set of signal output ports (14a, 14b) comprise an S signal output port (14a) and a G signal output port (14b), the set of input pads (23a, 23b) comprise an S input pad (23a) and a G input pad (23b), the set of electrical pads (244, 246) comprise an S electrical pad (244) and a G electrical pad (246), the matching circuit (26) comprises a matching resistance (260), and the set of PCB bond wires (30a, 30b) comprise an S PCB bond wire (30a) and a G PCB bond wire (30b), the S PCB bond wire (30a) and the G PCB bond wire (30b) electrically connecting the S signal output port (14a) and the G signal output port (14b) to the S input pad (23a) and the G input pad (23b) respectively, the S input pad (23a) and the G input pad (23b) being electrically connected to the S electrical pad (244) and the G electrical pad (246) respectively, and two ends of the matching resistance (260) being electrically connected to the S electrical pad (244) and the G electrical pad (246) respectively.

5. The optical transmitter according to any of claims 1-4, wherein the set of signal output ports (14a, 14b, 14c) comprise an S signal output port (14a), a first G signal output port (14b) and a second G signal output port (14c), the set of input pads (23a, 23b, 23c) comprise an S input pad (23a), a first G input pad (23b) and a second G input pad (23c), the set of electrical pads (244, 246, 248) comprise an S electrical pad (244), a first G electrical pad (246) and a second G electrical pad (248), the matching circuit (26) comprises a first matching resistance (260) and a second matching resistance (262), and the set of PCB bond wires (30a, 30b, 30c) comprise an S PCB bond wire (30a), a first G PCB bond wire (30b) and a second G PCB bond wire (30c), the S PCB bond wire (30a), the first G PCB bond wire (30b) and the second G PCB bond wire (30c) electrically connecting the S signal output port (14a), the first G signal output port (14b) and the second G signal output port (14c) to the S input pad (23a), the first G input pad (23b) and the second G input pad (23c) respectively, the S input pad (23a), the first G input pad (23b) and the second G input pad (23c) being electrically connected to the S electrical pad (244), the first G electrical pad (246) and the second G electrical pad (248) respectively, two ends of the first matching resistance (260) being electrically connected to the S electrical pad (244) and the first G electrical pad (246) respectively, and two ends of the second matching resistance (262) being electrically connected to the S electrical pad (244) and the second G electrical pad (248) respectively.

6. The optical transmitter according to any of claims 4 and 5, wherein the two ends of the first matching resistance (260) are directly electrically connected to the S electrical pad (244) and the first G electrical pad (246), and the two ends of the second matching resistance (262) are directly electrically connected to the S electrical pad (244) and the second G electrical pad (248).

7. The optical transmitter according to any of claims 1-6, wherein the matching circuit (26) further comprises a set of substrate bond wires (28a, 28b, 28c), the set of substrate bond wires (28a, 28b, 28c) comprising an S substrate bond wire (28a), a first G substrate bond wire (28b) and a second G substrate bond wire (28c), the S substrate bond wire (28a) and the first G substrate bond wire (28b) electrically connecting the two ends of the first matching resistance (260) to the S electrical pad (244) and the first G electrical pad (246) respectively, and the S substrate bond wire (28a) and the second G substrate bond wire (28c) electrically connecting the two ends of the second matching resistance (262) to the S electrical pad (244) and the second G electrical pad (248) respectively.

8. The optical transmitter according to any of claims 1-7, wherein the transmitter circuit (12) comprises a pulse amplitude modulation circuit (16), a drive circuit (18) and a set of signal input ports (15a, 15b), the pulse amplitude modulation circuit (16) modulating an input signal from the set of signal input ports (15a, 15b) into a modulation signal, and the drive circuit (18) converting the modulation signal into a drive signal.

9. A photonic integrated circuit (20) comprising a micro ring modulator (24), the photonic integrated circuit (20) **characterized in** further comprising:
a substrate (22), having a set of input pads (23a, 23b), the micro ring modulator (24), located on the substrate (22), the micro ring modulator (24) comprising a closed loop optical waveguide (240), a directional optical waveguide (242) and a set of electrical pads (244, 246), the closed loop optical waveguide (240) being adjacent to the directional optical waveguide (242), the set of input pads (23a, 23b) being electrically connected to the set of electrical pads (244, 246), and the micro ring modulator (24) having a modulation impedance value;
a matching circuit (26), electrically connected to the set of electrical pads (244, 246), the matching circuit (26) having a matching impedance value, which is configured to match the modulation impedance value;
a first impedance pad set, comprising a first S impedance pad (27a) and a first G impedance pad (27b), a first distance between the first S impedance pad (27a) and one electrical pad (244) of the set of electrical pads (244, 246) is the same as the distance between the first G impedance pad (27b) and the other electrical pad (246) of the set of electrical pads (244, 246); and
a second impedance pad set, comprising a second S impedance pad (27c) and a second G impedance pad (27d), a second distance between the second S impedance pad (27c) and one electrical pad (244) of the set of electrical pads (244, 246) is the same as the distance between the second G impedance pad (27d) and the other electrical pad (246) of the set of electrical pads (244, 246);
wherein the second distance is longer than the first distance, and the matching circuit (26) is configured to electrically connect to the set of electrical pads (244, 246) through the first impedance pad set or the second impedance pad set.

10. The photonic integrated circuit (20) according to claim 9, wherein the matching circuit (26) comprises a matching resistance (260) and a set of substrate bond wires (28a, 28b), the matching resistance (260) being connected to the set of electrical pads (244, 246) through the set of substrate bond wires (28a, 28b), and a resistance value of the set of substrate bond wires (28a, 28b) and the matching resistance (260) forming the matching impedance value.

11. The photonic integrated circuit (20) according to any of claims 9-10, wherein the matching circuit (26) comprises a matching resistance (260), two ends of the matching resistance (260) being directly electrically connected to the set of electrical pads (244, 246).

12. The photonic integrated circuit (20) according to any of claims 9-11, wherein the set of input pads (23a, 23b) comprise an S input pad (23a) and a G input pad (23b), and the set of electrical pads (244, 246) comprise an S electrical pad (244) and a G electrical pad (246), and the S input pad (23a) and the G input pad (23b) being electrically connected to the S electrical pad (244) and the G electrical pad (246) respectively, and the matching circuit (26) being electrically connected to the S electrical pad (244) and the G electrical pad (246).

13. The photonic integrated circuit (20) according to any of claims 9-12, wherein the set of input pads (23a, 23b, 23c) comprise an S input pad (23a), a first G input pad (23b) and a second G input pad (23c), the set of electrical pads (244, 246) comprise an S electrical pad (244), a first G electrical pad (246) and a second G electrical pad (248), and the matching circuit (26) comprises a first matching resistance (260) and a second matching resistance (262), the S input pad (23a), the first G input pad (23b) and the second G input pad (23c) being electrically connected to the S electrical pad (244), the first G electrical pad (246) and the second G electrical pad (248) respectively, two ends of the first matching resistance (260) being electrically connected to the S electrical pad (244) and the first G electrical pad (246) electrically, and two ends of the second matching resistance (262) being electrically connected to the S electrical pad (244) and the second G electrical pad (248) respectively.

14. The photonic integrated circuit (20) according to any claims 9-13, wherein the two ends of the first matching resistance (260) are directly electrically connected to the S electrical pad (244) and the first G electrical pad (246), and the two ends of the second matching resistance (262) are directly electrically connected to the S electrical pad (244) and the second G electrical pad (248).

15. The photonic integrated circuit (20) according to any claims 9-14, wherein the matching circuit (26) further comprises a set of substrate bond wires (28a, 28b, 28c), the set of substrate bond wires (28a, 28b, 28c) comprising an S substrate bond wire (28a), a first G substrate bond wire (28b) and a second G substrate bond wire (28c), the S substrate bond wire (28a) and the first G substrate bond wire (28b) electrically connecting the two ends of the first matching resistance (260) to the S electrical pad (244) and the first G electrical pad (246) respectively, and the S substrate bond wire (28a) and the second G substrate bond wire (28c) electrically connecting the two ends of the second matching resistance (262) to the S electrical pad (244) and the second G electrical pad (248) respectively.
